# EUROPÄISCHE PATENTANMELDUNG

(11) **EP 4 826 655 A1**
(43) Veröffentlichungstag der Anmeldung: **21.10.2026**
(21) Anmeldenummer: 25170254.4
(22) Anmeldetag: 14.04.2025
(51) Int. Cl.: G06T 7/73

(54) **VERFAHREN ZUM ERMITTELN VON DREIDIMENSIONALEN FIXPUNKTEN EINES IN EINEM FISCHAUGENBILD GEZEIGTEN OBJEKTS**

(71) Anmelder: Robert Bosch GmbH, 70442 Stuttgart (DE)
(72) Erfinder: Leibe, Bastian, 52134 Herzogenrath (DE); Linder, Timm, 71032 Boeblingen (DE); Peter, Sven, 35463 Fernwald (DE); Mack, Dennis, 31199 Diekholzen (DE); Thillmann, Henrik, 52070 Aachen (DE); Kaes, Stephanie, 52074 Aachen (DE)

(57) **Zusammenfassung**

Verschiedene Aspekte betreffen ein Verfahren zum Steuern einer Robotervorrichtung, das Verfahren aufweisend: Empfangen eines Bildes (302), welches ein Fischaugen-Format aufweist und ein Objekt in einer Umgebung der Robotervorrichtung zeigt; Ermitteln, mittels Objekterkennung, eines Begrenzungsrahmens (304), welcher eine Position des Objekts in dem Bild angibt; Ermitteln eines Belegungswertes (310), welcher angibt, wie viel des Sichtfeldes der Kamera das Objekt belegt; Erzeugen eines Bildausschnitts (306), welcher zumindest alle dem Begrenzungsrahmen zugehörigen Bildpunkte aufweist; Ermitteln eines projizierten Bildausschnitts mittels Projizierens des Bildausschnitts unter Verwendung eines Kameramodells, welches ein Lochkamera-Modell (314) ist, wenn der Belegungswert kleiner als oder gleich einem Schwellenwert ist, und ein Fischaugen-basiertes Kameramodell (316) ist, wenn der Belegungswert größer als der Schwellenwert ist; Eingeben des projizierten Bildausschnitts in ein maschinelles Lernmodell, welches eingerichtet ist, in Reaktion auf die Eingabe des projizierten Bildausschnitts und Informationen bezüglich des Kameramodells dreidimensionale Fixpunkte des Objekts auszugeben; und Steuern der Robotervorrichtung unter Verwendung der dreidimensionalen Fixpunkte.

## Beschreibung

### Stand der Technik

Im Rahmen der Bilderkennung ist das Erkennen von dreidimensionalen (3D) Fixpunkten (welche auch als Schlüsselpunkte bezeichnet werden; engl.: keypoints) eines in einem Bild gezeigten Objekts für zahlreiche technische Anwendungen von Bedeutung. Beispielsweise bei der Mensch-Roboter-Interaktion können die 3D Fixpunkte eines Menschen zur Schätzung einer Körperpose des Menschen heranzogen werden, um basierend darauf eine entsprechende Interaktion zu steuern. Aber auch beim Greifen von Objekten mittels eines Roboterarms sind 3D Fixpunkte relevant, um eine Greifkonfiguration des Roboterarms zum Greifen eines Objekts zu ermitteln.

I. Sárándi, et al.: "MeTRAbs: Metric-Scale Truncation-Robust Heatmaps for Absolute 3D Human Pose Estimation", arXiv: 2007.07227, 2020 (im Folgenden als Referenz [1] bezeichnet) beschreibt ein maschinelles Lernmodell (namens MeTRAbs), welches absolute 3D Fixpunkte anhand von (geradlinigen) Lochkamera-Bildern schätzen kann.

### Offenbarung der Erfindung

Allerdings haben Lochkameras Kameralinsen mit einem begrenzten Öffnungswinkel und damit ein begrenztes Sichtfeld. Für verschiedene technische Anwendungen kann es vorteilhaft sein, eine Kamera mit einem größeren Sichtfeld zu verwenden, wie beispielsweise Fischaugenkameras (also eine Kamera mit einem Fischaugenobjektiv), welche (je nach Konfiguration) ein Sichtfeld von ungefähr 180° bis ungefähr 270° abdecken können. Um ein solches Sichtfeld abzudecken wären ansonsten mehrere Lochkameras erforderlich, deren Bilder (mittels Stitching) kombiniert werden könnten, was allerdings zu Fehlern in den Bild-Übergangen führen und durch eine Diskontinuität hinsichtlich des verwendeten Kameramodells die Schätzung der (z.B. absoluten) 3D Fixpunkte erschweren kann.

Jedoch haben die mittels einer Fischaugenkamera aufgenommenen Fischaugenbilder starke radiale Verzerrungen (insbesondere an den Bildrändern) und die viel kleinere Brennweite der Fischaugenkamera führt zu einer herausgezoomten Perspektive, die weit entfernte Objekte kleiner und mit geringerer Auflösung erscheinen lässt. Dies führt zu fehlerhaften Fixpunkten, wenn Fischaugenbilder in maschinelle Lernmodelle (wie beispielsweise MeTRAbs) eingegeben werden, welche trainiert wurden, die Fixpunkte anhand von Lochkamera-Bildern zu schätzen.

Die vorliegende Offenbarung bezieht sich auf ein Verfahren, welches es ermöglicht, 3D Fixpunkte eines in einem Fischaugenbild gezeigten Objektes mit hoher Genauigkeit zu ermitteln. Dies wird beispielsweise dadurch erreicht, dass vor der Eingabe in das maschinelle Lernmodell eine Projektion in ein anderes Kameramodell in Abhängigkeit davon erfolgt, wie viel des Sichtfeldes der Fischaugenkamera von dem Objekt belegt ist. Anschaulich wird, wenn das Objekt sehr nah an der Fischaugenkamera ist, ein anderes Kameramodell verwendet als wenn das Objekt weiter entfernt von der Fischaugenkamera ist.

Eine Robotervorrichtung, welche eine Fischaugenkamera zum Erfassen ihrer Umgebung aufweist, kann anhand der so (mit erhöhter Genauigkeit) ermittelten 3D Fixpunkte genauer gesteuert werden. In einem Beispiel kann das Objekt ein mittels eines Roboterarms zu manipulierendes Objekt sein und eine Roboterkonfiguration (auch als Greifkonfiguration bezeichnet) zum Greifen des Objekts kann anhand dieser 3D Fixpunkte ermittelt werden. In einem anderen Beispiel kann das Objekt ein Mensch sein und die 3D Fixpunkte des Menschen können herangezogen werden, um eine Körperpose des Menschen zu ermitteln. Anschaulich kann das Verfahren eine Schätzung menschlicher (oder tierischer) Körperposen aufweisen. Anhand der Körperpose kann dann beispielsweise eine Trajektorie zum Bewegen des Roboterarms und/oder zum Navigieren des Roboters ermittelt werden. Die Körperpose eines Menschen kann beispielsweise herangezogen werden, um eine Aktion des Menschen (z.B. Sitzen, Laufen, Liegen, etc.) zu ermitteln, wobei je nach Aktion ein anderes Kollisionsrisiko beim Bewegen des Roboterarms und/oder dem Navigieren des Roboters entsteht. In einem Beispiel kann die Körperpose herangezogen werden, um von Menschen ausgeführte Gesten (z.B. Winken, mit dem Arm in eine bestimmte Richtung zeigen, oder die Arme vor dem Körper verschränken) zu erkennen. Die erkannten Gesten können dann z.B. zur Mensch-Roboter-Interaktion genutzt werden, um dem Roboter Instruktionen zu erteilen (z.B. eine bestimmte Bewegung ausführen, oder den Roboter anhalten).

Verschiedene Aspekte betreffen ein Verfahren zum Steuern einer Robotervorrichtung, das Verfahren aufweisend: Empfangen eines Bildes, welches ein Fischaugen-Format aufweist und (mindestens) ein Objekt in einer Umgebung der Robotervorrichtung zeigt; Ermitteln, mittels Objekterkennung, eines Begrenzungsrahmens, welcher eine Position des Objekts in dem Bild angibt; Ermitteln eines Belegungswertes, welcher angibt, wie viel des Sichtfeldes der Kamera das Objekt belegt; Erzeugen eines Bildausschnitts (mit vordefinierter Größe), welcher zumindest alle dem Begrenzungsrahmen zugehörigen Bildpunkte aufweist; Ermitteln eines projizierten Bildausschnitts mittels (Re-) Projizierens des Bildausschnitts unter Verwendung eines Kameramodells, welches ein Lochkamera-Modell ist, wenn der Belegungswert kleiner als oder gleich einem Schwellenwert ist, und ein Fischaugen-basiertes Kameramodell ist, wenn der Belegungswert größer als der Schwellenwert ist; Eingeben des projizierten Bildausschnitts in ein maschinelles Lernmodell, welches eingerichtet ist, in Reaktion auf die Eingabe des projizierten Bildausschnitts und Informationen bezüglich des Kameramodells (z.B. Parametern des Kameramodells) dreidimensionale (3D) Fixpunkte des Objekts auszugeben; und Steuern der Robotervorrichtung unter Verwendung der dreidimensionalen Fixpunkte.

Im Folgenden werden verschiedene Ausführungsbeispiele angegeben.

Beispiel 1 ist das Verfahren zum Steuern einer Robotervorrichtung wie voranstehend beschrieben.

Beispiel 2 ist eingerichtet gemäß Beispiel 1, wobei die dreidimensionalen Fixpunkte absolute dreidimensionale Fixpunkte sind und wobei das Fischaugen-basierte Kameramodell ein Doppel-Sphären-Fischaugen-Kameramodell ist. Optional kann das maschinelle Lernmodell ein MeTRAbs-basiertes Lernmodell sein.

Im Gegensatz zu anderen Fischaugen-Kameramodellen, wie beispielsweise dem Äquidistanten Fischaugen-Kameramodell, ist das Doppel-Sphären-Fischaugen-Kameramodell analytisch invertierbar. Dies ermöglicht beispielsweise das maschinelle Lernmodell (z.B. mittels Finetuning) auch für Fischaugenbilder auf absolute 3D Fixpunkte Ende-zu-Ende zu trainieren, da die Rückprojektion analytisch möglich ist.

Beispiel 3 ist eingerichtet gemäß Beispiel 1 oder 2, wobei das Ermitteln des Belegungswertes aufweist: Ermitteln eines dreidimensionalen Begrenzungsrahmens mittels Projizierens des (zweidimensionalen) Begrenzungsrahmens in einen dreidimensionalen Raum der Umgebung der Robotervorrichtung; Ermitteln eines maximalen Sehwinkels des dreidimensionalen Begrenzungsrahmens relativ zu einer Kameraposition (z.B. zu einem Kameramittelpunkt), von welcher aus das Bild erfasst wurde; und Auswählen des maximalen Sehwinkels als den Belegungswert.

Anschaulich repräsentiert der maximale Sehwinkel eine maximale Ausdehnung des Objekts (im dreidimensionalen Raum). Der maximale Sehwinkel kann anschaulich angeben, welchen Anteil des Bildwinkels der Kamera das Objekt belegt (z.B. einnimmt, bedeckt, etc.). Dies verbesserte die Auswahl des optimalen Kameramodells beispielsweise in dem Fall, dass die 3D Fixpunkte vergleichsweise weit auseinander liegen. Dies kann zum Beispiel dann der Fall sein, wenn die 3D Fixpunkte Fixpunkte des menschlichen Körpers sind, welche dann beispielsweise zum Ermitteln menschlicher Körperposen herangezogen werden. Dadurch kann die Genauigkeit beim Ermitteln der 3D Fixpunkte erhöht werden.

Beispiel 4 ist eingerichtet gemäß Beispiel 3, wobei der Schwellenwert in einem Bereich von ungefähr 100° bis ungefähr 140° liegt.

Es hat sich gezeigt, dass ein Fehler des Lochkamera-Modells über diesem Schwellenwert exponentiell ansteigt. Im Gegensatz dazu steigt der Fehler des Fischaugen-basierten Kameramodells lediglich linear. Folglich kann durch die Auswahl der Kameramodells in Abhängigkeit des maximalen Sehwinkels die Genauigkeit der ermittelten 3D Fixpunkte signifikant erhöht werden.

In Beispiel 5 kann das Verfahren gemäß einem der Beispiele 1 bis 4 optional ferner aufweisen: vor dem Projizierens des Bildausschnitts, Ausrichten einer optischen Achse des Kameramodells auf einen Mittelpunkt des Begrenzungsrahmens (z.B. mittels Drehens der optischen Achse).

Auf diese Weise kann die Ausrichtung des Objekts vergleichbar zu einer Ausrichtung von Objekten während des Trainierens des maschinellen Lernmodells sein, wodurch die Genauigkeit der ermittelten 3D Fixpunkte erhöht wird.

In Beispiel 6 kann das Verfahren gemäß einem der Beispiele 1 bis 5 optional ferner aufweisen: vor dem Projizierens des Bildausschnitts, Anpassen eines Zoomfaktors des Bildausschnitts derart, dass der Bildausschnitt eine vordefinierte Bildgröße aufweist.

Beispielsweise kann (z.B. nach dem Ausrichten der optischen Achse des Kameramodells) der Zoomfaktor derart angepasst werden, dass die längere Seite des Begrenzungsrahmens komplett im Bildausschnitt ist und, wenn erforderlich, können für die vordefinierte Bildgröße erforderliche Bilddaten aus dem (ursprünglichen) Bild eingefügt werden (anschaulich kann ein fehlender Hintergrund des Bildausschnittes aufgefüllt werden).

Beispiel 7 ist eine Steuervorrichtung, die eingerichtet ist, das Verfahren gemäß einem der Beispiele 1 bis 6 auszuführen.

Beispiel 8 ist eine Robotervorrichtung, welche die Steuervorrichtung gemäß Beispiel 7 aufweist.

Beispiel 9 ist ein Computerprogramm mit Befehlen, die, wenn sie durch einen Prozessor ausgeführt werden, bewirken, dass der Prozessor das Verfahren gemäß einem der Beispiele 1 bis 6 durchführt.

Beispiel 10 ist ein computerlesbares Medium, das Befehle speichert, die, wenn sie durch einen Prozessor ausgeführt werden, bewirken, dass der Prozessor das Verfahren gemäß einem der Beispiele 1 bis 6 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.
Figur 1 zeigt eine Robotervorrichtungsanordnung gemäß verschiedenen Aspekten;
Figur 2 zeigt ein Ablaufdiagramm eines Verfahrens zum Steuern einer Robotervorrichtung gemäß verschiedenen Aspekten;
Figur 3 zeigt ein schematisches Ablaufdiagramm zum Ermitteln von 3D Fixpunkten eines in einem Fischaugenbild gezeigten Objekts gemäß verschiedenen Aspekten;
Figur 4 zeigt einen mittleren Positionsfehler pro Gelenk in Abhängigkeit des maximalen Sehwinkels des hierin beschriebenen schwellenwertbasierten Kameramodells im Vergleich zu anderen Kameramodellen;
Figur 5 zeigt einen Begrenzungsrahmen-basierten Sehwinkel als beispielhaften Belegungswert; und
Figuren 6A und 6B zeigen verschiedene Aspekte beim Ermitteln von 3D Fixpunkten anhand eines Fischaugenbildes, in welchem das Objekt einen Sehwinkel oberhalb des Schwellenwertes aufweist.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

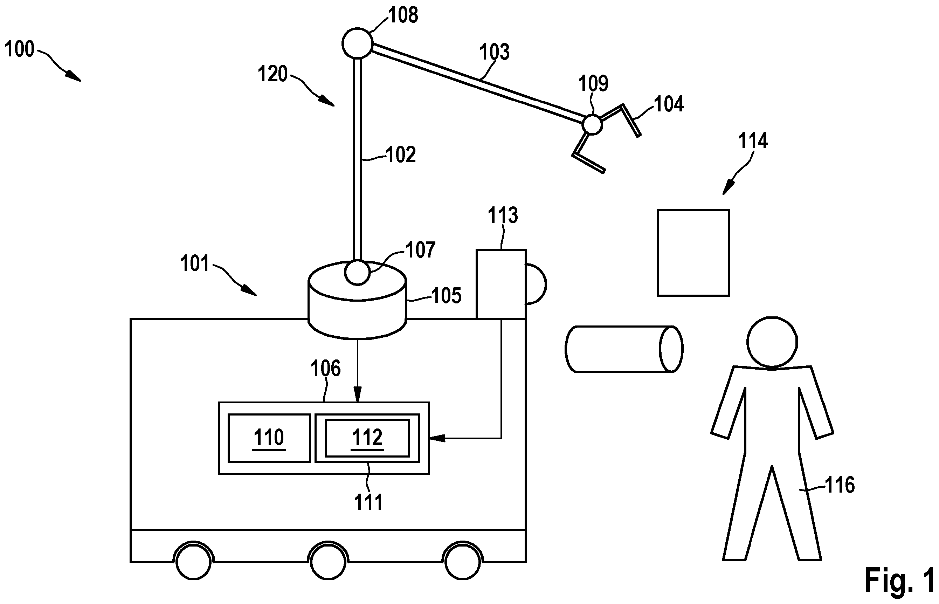

**FIG.1** zeigt eine Robotervorrichtungsanordnung 100 gemäß verschiedenen Aspekten. Die Robotervorrichtungsanordnung 100 kann eine Robotervorrichtung 101 (kurz: Roboter) aufweisen. Die in FIG. 1 gezeigte und im Folgenden beispielhaft beschriebene Robotervorrichtung 101 stellt zur Veranschaulichung eine beispielhafte Robotervorrichtung dar und kann zum Beispiel einen mobilen Roboter mit einem Roboterarm 120 zum Bewegen, Montieren oder Bearbeiten eines Werkstücks, zum Bewegen von Objekten 114, zur Teilentnahme (engl.: bin picking), etc. aufweisen. Es wird darauf hingewiesen, dass die Robotervorrichtung der Veranschaulichung dient und allgemein jede Art von computergesteuerter Vorrichtung sein kann, wie beispielsweise ein Roboter (z.B. ein Fertigungsroboter, ein Wartungsroboter, ein Haushaltsroboter, ein Transportroboter, ein Medizinroboter, etc.), ein Fahrzeug (z.B. ein zumindest teilweise automatisiertes Fahrzeug), ein Haushaltsgerät, eine Produktionsmaschine, ein persönlicher Assistent, ein Zugangs-Steuerungs-System etc., sowie jede andere Art von Robotervorrichtung. Bei dem Transportroboter (zum Transportieren von Objekten (z.B. Gütern)) kann es sich beispielsweise um ein Active Shuttle von Bosch Rexroth handeln. Gemäß verschiedenen Aspekten kann die Robotervorrichtung 101 eine mobile Robotervorrichtung 101 sein. Als "mobile Robotervorrichtung", wie hierin verwendet, kann eine Robotervorrichtung verstanden werden, welche ihren Standort ändern kann. Eine "mobile Robotervorrichtung" kann ein Bodenfahrzeug (z. B. ein Automobil, ein Bus, ein Minibus, ein Lieferwagen, ein Lastwagen, ein Wohnmobil, ein Fahrzeuganhänger, ein Motorrad usw.) das sich auf dem Boden fortbewegt oder auf dem Boden gefahren wird (z. B. auf einer Straße, auf einem Weg, auf einer Schiene, auf einer oder mehreren Schienen, im Gelände usw.), ein Luftfahrzeug (z. B. eine Drohne, ein Flugzeug usw.), das über dem Boden für eine beliebige Dauer manövriert werden kann, oder ein Wasserfahrzeug (z. B. ein Boot, ein Schiff, ein Tauchboot, ein U-Boot usw.), das auf oder unter Wasser manövriert werden kann, sein. Das hierin beschriebene Verfahren ist imstande, sich an dynamische Umgebungen anzupassen, weshalb dieses für mobile Robotervorrichtungen besonders geeignet ist. Allerdings können auch Umgebungen nichtmobiler Robotervorrichtungen, wie beispielsweise eines Roboterarms, dynamisch sein, da sich Objekte (wie Güter, Menschen, etc.) in deren Umgebungen bewegen können. Die (dynamische) Umgebung der Robotervorrichtung 101 kann statische und dynamische Objekte aufweisen, wie beispielsweise zu manipulierende Objekte 114 und/oder ein oder mehrere Menschen (z. B. Arbeiter) 116, etc.

Die Robotervorrichtung 101 kann einen Roboterarm 120 aufweisen. Der Roboterarm 120 kann Roboterglieder 102, 103, 104 und einen Sockel (oder allgemein eine Halterung) 105 aufweisen, durch welche die Roboterglieder 102, 103, 104 getragen werden. Der Begriff "Roboterglieder " kann sich auf die beweglichen Teile der Robotervorrichtung 101 beziehen, deren Betätigung eine physische Interaktion mit der Umgebung ermöglicht, um beispielsweise eine Aufgabe auszuführen, z.B. um ein oder mehrere Fertigkeiten auszuführen bzw. durchzuführen.

Zur Steuerung der Robotervorrichtung 101 kann die Robotervorrichtungsanordnung 100 eine (Roboter) Steuervorrichtung 106 aufweisen, die eingerichtet ist, die Interaktion mit der Umgebung gemäß einem Steuerungsprogramm zu realisieren. Das letzte Element 104 (von dem Sockel 105 aus gesehen) der Roboterglieder 102, 103, 104 wird auch als Endeffektor 104 bezeichnet. Die Art des Endeffektors 104 kann festlegen, ob die Robotervorrichtung 101 imstande ist, greifende und/oder nicht-greifende Objektmanipulationen durchzuführen. Eine greifende Objektmanipulation kann sich auf eine Manipulation eines Objekts beziehen, bei der das Objekt gegriffen wird, wohingegen sich eine nicht-greifende Objektmanipulation auf eine Manipulation eines Objekts beziehen kann, bei der das Objekt nicht gegriffen wird. Folglich kann die Robotervorrichtung 101 zur greifenden Objektmanipulation fähig sein, wenn der Endeffektor 104 mindestens ein Greifwerkzeug (bei dem es sich auch um eine Ansaugvorrichtung (z.B. einen Saugkopf) oder dergleichen handeln kann) aufweist. In jedem Fall kann die Robotervorrichtung 101 zur nicht-greifenden Objektmanipulation fähig sein, beispielsweise indem das Objekt (ohne es zu greifen) geschoben wird, um zum Beispiel dessen laterale Position und/oder Orientierung zu ändern. In dem Fall, dass die Robotervorrichtung 101 navigierbar ist, kann die Steuervorrichtung 106 eingerichtet sein, Steuerparameter zum Navigieren der Robotervorrichtung unter Verwendung von in der Umgebung der Robotervorrichtung 101 erkannten Objekten (z.B. der Person 116) zu steuern.

Die anderen Roboterglieder 102, 103 (näher am Sockel 105) können eine Positionierungsvorrichtung bilden, so dass zusammen mit dem Endeffektor 104 ein Roboterarm 120 (oder Gelenkarm) mit dem Endeffektor 104 an seinem Ende vorgesehen ist. Der Roboterarm 120 kann ein mechanischer Arm sein, der ähnliche Funktionen wie ein menschlicher Arm erfüllen kann (möglicherweise mit einem Werkzeug an seinem Ende).

Der Roboterarm 120 kann Verbindungselemente 107, 108, 109 aufweisen, welche die Roboterglieder 102, 103, 104 miteinander und mit dem Sockel 105 verbinden. Ein Verbindungselement 107, 108, 109 kann ein oder mehrere Gelenke aufweisen, von denen jedes eine Drehbewegung und/oder eine Translationsbewegung (d.h. eine Verschiebung) für zugehörige Roboterglieder relativ zueinander bereitstellen kann. Die Bewegung der Roboterglieder 102, 103, 104 kann mit Hilfe von Stellgliedern eingeleitet werden, die von der Steuervorrichtung 106 gesteuert werden.

Der Begriff "Stellglied" kann als eine Komponente verstanden werden, die geeignet ist, als Reaktion darauf, dass sie angetrieben wird, einen Mechanismus zu beeinflussen. Das Stellglied kann von der Steuervorrichtung 106 ausgegebene Anweisungen (die sogenannte Aktivierung) in mechanische Bewegungen umsetzen. Das Stellglied, z.B. ein elektromechanischer Wandler, kann eingerichtet werden, elektrische Energie als Reaktion auf seine Ansteuerung in mechanische Energie umzuwandeln.

Der Begriff "Steuervorrichtung" (auch als "Steuereinrichtung" bezeichnet) kann als jede Art von logischer Implementierungseinheit verstanden werden, die beispielsweise eine Schaltung und/oder einen Prozessor beinhalten kann, der in der Lage ist, in einem Speichermedium gespeicherte Software, Firmware oder eine Kombination derselben auszuführen, und die Anweisungen, z.B. an ein Stellglied im vorliegenden Beispiel, erteilen kann. Die Steuervorrichtung kann beispielsweise durch Programmcode (z.B. Software) eingerichtet werden, den Betrieb eines Systems, im vorliegenden Beispiel eines Roboters, zu steuern.

In dem vorliegenden Beispiel kann die Steuervorrichtung 106 einen Computer 110 und einen Speicher 111, der Code und Daten speichert, auf deren Grundlage der Computer 110 die Robotervorrichtung 101 steuert, aufweisen. Gemäß verschiedener Ausführungsformen kann die Steuervorrichtung 106 die Robotervorrichtung 101 auf der Grundlage eines im Speicher 111 gespeicherten Roboter-Steuerungsmodells 112 steuern.

Die Robotervorrichtung 101 kann mindestens eine Fischaugenkamera 113 aufweisen. Als Fischaugenkamera, wie hierin beschrieben, kann jede Art von Bildgebungssensor verstanden werden, der eingerichtet ist, ein Fischaugenbild zu erfassen. Als Fischaugenbild wird ein Bild mit einem Fischaugen (engl.: Fisheye)-Format verstanden. Das Fischaugenbild kann jede Art von Bild mit Fischaugenformat sein, wie beispielsweise ein RGB-Bild, ein Tiefenbild, ein Infrarot-Bild, ein monochromes Bild, etc.

Die Steuervorrichtung 106 kann eingerichtet sein, die Robotervorrichtung 101 unter Verwendung des Fischaugenbildes zu steuern.

In einem Beispiel kann die Aufgabe der Robotervorrichtung 101 ein Aufnehmen (z.B. Greifen oder Ansaugen) eines Objekts von ein oder mehreren Objekten 114 und ein Bewegen des aufgenommenen Objekts sein. Um eine geeignete Greifposition des aufzunehmenden Objekts ermitteln zu können, kann die Steuervorrichtung 106 das Fischaugenbild, welches die Umgebung der Robotervorrichtung 101 zeigt, verwenden. Hierzu können beispielsweise anhand des Fischaugenbildes 3D Fixpunkte des Objekts ermittelt werden und anhand dieser 3D Fixpunkte kann dann die Greifkonfiguration der Robotervorrichtung 101 ermittelt werden.

In einem anderen Beispiel kann die Steuervorrichtung 106 das Fischaugenbild verwenden, um 3D Fixpunkte des Menschen 116 zu ermitteln. Anschaulich kann es sich hierbei um eine Schätzung der Körperpose des Menschen 116 handeln. Die Steuervorrichtung 106 kann dann die Robotervorrichtung 101 unter Verwendung dieser 3D Fixpunkte (z.B. unter Verwendung der ermittelten Körperpose) navigieren (z.B. um eine Kollision mit dem Menschen 116 zu vermeiden).

Es wird verstanden, dass dies Beispiele sind und zahlreiche weitere Anwendungen zum Steuern von Robotervorrichtungen unter Verwendung von 3D Fixpunkten von Objekten gibt.

Im Folgenden werden verschiedene Aspekte des Ermittelns der 3D Fixpunkte anhand eines Fischaugenbildes beschrieben.

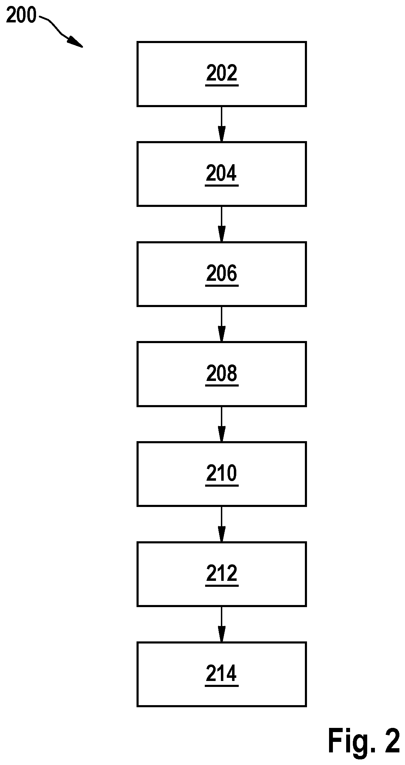

**FIG.2** zeigt ein Ablaufdiagramm eines (computerimplementierten) Verfahrens 200 zum Steuern einer Robotervorrichtung gemäß verschiedenen Aspekten.

Das Verfahren 200 kann (in 202) ein Empfangen eines Bildes, welches ein Fischaugen-Format aufweist und (mindestens) ein Objekt in einer Umgebung der Robotervorrichtung zeigt, aufweisen.

Das Verfahren 200 kann (in 204) ein Ermitteln, mittels Objekterkennung, eines Begrenzungsrahmens, welcher eine Position des Objekts in dem Bild angibt, aufweisen.

Das Verfahren 200 kann (in 206) ein Ermitteln eines Belegungswertes, welcher angibt, wie viel des Sichtfeldes der Kamera das Objekt belegt, aufweisen.

Das Verfahren 200 kann (in 208) ein Erzeugen eines Bildausschnitts (mit vordefinierter Größe), welcher zumindest alle dem Begrenzungsrahmen zugehörigen Bildpunkte aufweist, aufweisen.

Das Verfahren 200 kann (in 210) ein Ermitteln eines projizierten Bildausschnitts mittels (Re-) Projizierens des Bildausschnitts unter Verwendung eines Kameramodells, welches ein (virtuelles) Lochkamera-Modell ist, wenn der Belegungswert kleiner als oder gleich einem Schwellenwert ist, und ein Fischaugen-basiertes Kameramodell ist, wenn der Belegungswert größer als der Schwellenwert ist, aufweisen.

Das Verfahren 200 kann (in 212) ein Eingeben des projizierten Bildausschnitts in ein maschinelles Lernmodell, welches eingerichtet ist, in Reaktion auf die Eingabe des projizierten Bildausschnitts und Informationen bezüglich des Kameramodells (z.B. Parametern des Kameramodells) dreidimensionale (3D) Fixpunkte des Objekts auszugeben, aufweisen.

Das Verfahren 200 kann (in 214) ein Steuern der Robotervorrichtung unter Verwendung der dreidimensionalen Fixpunkte aufweisen.

Im Folgenden werden verschiedene Aspekte des Verfahrens 200 detaillierter beschrieben.

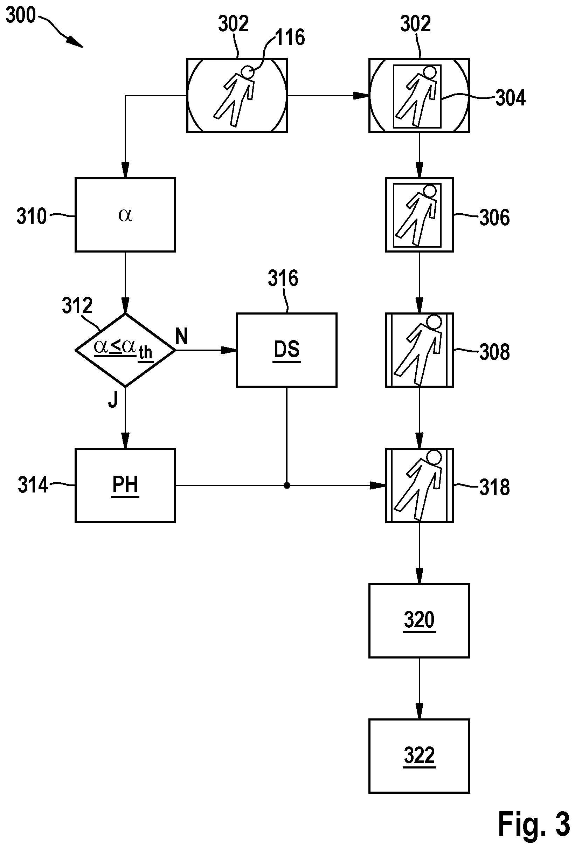

**FIG.3** zeigt ein schematisches Ablaufdiagramm 300 zum Ermitteln von 3D Fixpunkten 322 eines in einem Fischaugenbild 302 gezeigten Objekts 116 gemäß verschiedenen Aspekten.

Fixpunkte eines Objekts können Punkte des Objektes sein, welche eine semantische Bedeutung haben. Ist das Objekt beispielsweise ein Gegenstand, so können Ecken, Flächenmittelpunkte, usw. Fixpunkte des Gegenstands sein. Ist das Objekt beispielsweise ein Mensch, so können Ellbogen, Hand, Knie, usw. Fixpunkte des Menschen sein.

In 202 kann mittels Objekterkennung das Objekt 116 erkannt und ein zugehöriger (zweidimensionaler) Begrenzungsrahmen 304 ermittelt werden. Hierfür kann jede Art von Objekterkennungsmodell (z.B. maschinellem Lernmodell) eingesetzt werden, welches imstande ist, Objekte in Bildern zu erkennen und einen zugehörigen Begrenzungsrahmen auszugeben. In manchen Aspekten kann das Modell ein auf Fischaugenbilder trainiertes Objekterkennungsmodell sein.

In 208 kann dann ein Bildausschnitt 306 erzeugt werden, welcher den Begrenzungsrahmen und einen Teil des Objekthintergrunds zeigt. Dieser Bildausschnitt 306 kann beispielsweise eine vordefinierte Größe aufweisen. Dies kann beispielsweise eine sein, für welche das maschinelle Lernmodell 320 eingerichtet ist.

Das maschinelle Lernmodell 320 kann eingerichtet sein, eine vordefinierte Bildgröße zu verarbeiten. Je nach Auflösung und Größe des Objekts (und damit der Größe des Begrenzungsrahmens 304) kann der Bildausschnitt 306 größer oder kleiner als diese vordefinierte Bildgröße sein. Daher kann (in 308) ein Zoomfaktor des Bildausschnitts 306 derart angepasst werden, dass der Bildausschnitt 306 die vordefinierte Bildgröße aufweist. Anschaulich kann in dem in FIG.3 gezeigten Fall hineingezoomt werden. Beispielsweise kann der Zoomfaktor derart angepasst werden, dass die längere Seite des Begrenzungsrahmens 304 komplett im Bildausschnitt 306 ist.

In 206 kann der Belegungswert 310 ermittelt werden. Der Belegungswert 310 kann ein Wert eines vordefinierten Parameters sein, der geeignet ist anzugeben, wie viel des Sichtfeldes der Fischaugenkamera 113 das Objekt 116 belegt. Beispielsweise im Falle der Körperposen dann der Belegungswert 310 eine Ausdehnung der Körperpose sein.

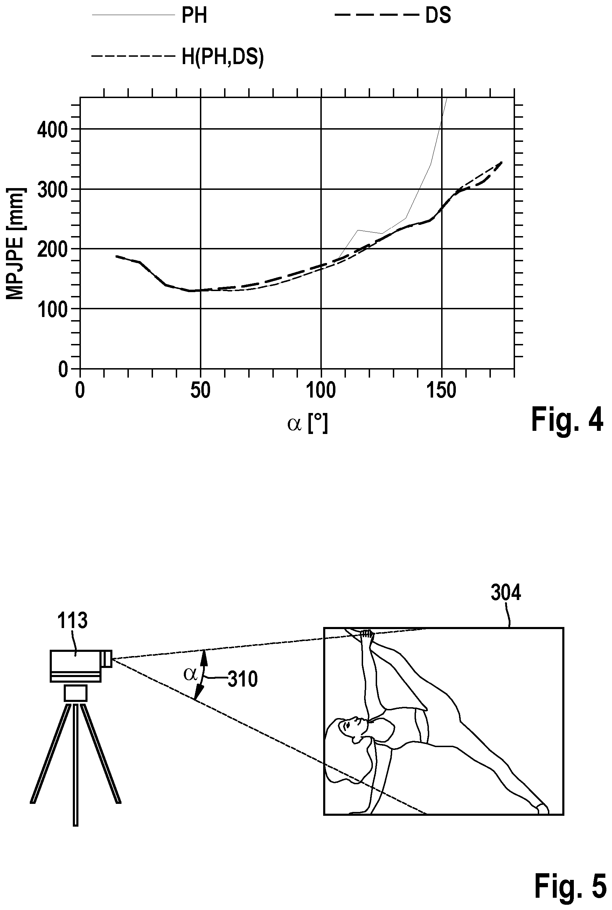

Gemäß verschiedenen Aspekten kann Belegungswert 310 ein maximaler Sehwinkel, *α*, des Objekts 116 sein. Dieser maximale Sehwinkel, *α*, des Objekts 116 kann beispielsweise anhand des Begrenzungsrahmens 304 ermittelt (z.B. geschätzt) werden. Dies ist zur Veranschaulichung in **FIG.5** dargestellt. Zum Ermitteln des maximalen Sehwinkel, *α*, anhand des Begrenzungsrahmens 304 kann ein 3D-Begrenzungsrahmen ermittelt werden, indem der (zweidimensionale) Begrenzungsrahmen 304 in einen dreidimensionalen Raum der Umgebung der Robotervorrichtung 101 projiziert wird. Dann kann der maximale Sehwinkel, *α*, des Objekts 116 relativ zu einer Kameraposition (z.B. zu einem Kameramittelpunkt), von welcher aus das Fischaugenbild 302 erfasst wurde (also der Fischaugenkamera 113) ermittelt werden. Der maximale Sehwinkel, *α*, kann der größte Sehwinkel sein aus einem vertikalen Sehwinkel, einem horizontalen Sehwinkel und optional ferner diagonalen Sehwinkeln.

Allerdings wird verstanden, dass der maximale Sehwinkel, *α*, ein beispielhafter Belegungswert 310 ist und dass der Belegungswert 310 auch ein anderer Parameter sein kann. Beispielsweise kann dieser ein Anteil einer Anzahl an Bildpunkten, die dem Objekt 116 zugehörig sind, bezogen auf die Gesamtanzahl an Bildpunkten in dem Fischaugenbild 302 sein. Allerdings hat sich gezeigt, dass, wenn der maximale Sehwinkel, *α*, verwendet wird, die 3D Fixpunkte (beispielsweise im Falle des Ermittelns menschlicher Körperposen) eine signifikant höhere Genauigkeit aufweisen (da 3D Informationen berücksichtigt werden).

Mit Bezug auf FIG.3 kann der Belegungswert 310 dann in 312 mit dem Schwellenwert verglichen werden. Ist der Belegungswert 310 kleiner als oder gleich dem Schwellenwert ("J" in 312), kann ein Lochkamera (engl.: pinhole) Modell, PH, 314 als Kameramodell ausgewählt werden. Ist der Belegungswert 310 größer als der Schwellenwert ("N" in 312), kann ein Fischaugen-basiertes Kameramodell 316 als Kameramodell ausgewählt werden.

Das Fischaugen-basierte Kameramodell 316 kann beispielsweise ein Äquidistantes Fischaugen-Kameramodell oder ein Doppel-Sphären-Fischaugen-Kameramodell sein. Das Äquidistante Fischaugen-Kameramodell wird beispielsweise in C. Hughes et al.: "Equidistant fish-eye perspective with application in distortion centre estimation", Image and Vision Computing, 2010 beschrieben. Das Doppel-Sphären-Fischaugen-Kameramodell wird beispielsweise in V. Usenko et al.: "The Double Sphere Camera Model", arXiv:1807.08957, 2018 beschrieben.

Gemäß verschiedenen Aspekten ist das Fischaugen-basierte Kameramodell 316 ein Doppel-Sphären-Fischaugen-Kameramodell, DS, 316. Dieses ist analytisch invertierbar, was ermöglicht, das maschinelle Lernmodell 320 (z.B. mittels Finetuning) auf absolute 3D Fixpunkte Ende-zu-Ende zu trainieren (da die Rückprojektion analytisch möglich ist). Zur Veranschaulichung wird das Fischaugen-basierte Kameramodell im Folgenden als Doppel-Sphären-Fischaugen-Kameramodell, DS, 316 beschrieben. Es wird verstanden, dass dies der Veranschaulichung dient und dass das Fischaugen-basierte Kameramodell auch ein anderes Kameramodell sein kann.

In dem beispielhaften Fall des maximalen Sehwinkels, *α*, kann der Schwellenwert ein Schwellenwertwinkel, *αₜₕ,* sein. Für den Anwendungsfall der Ermittlung von Körperposen zeigt **FIG.4** einen mittleren Positionsfehler pro Gelenk (MPJPE) in Abhängigkeit des maximalen Sehwinkels, *α*. Anschaulich zeigt sich, dass der Fehler (MPJPE) des Lochkamera-Modells, PH, 314 bis zu einem Schwellenwert von ungefähr 110° kleiner ist als der Fehler (MPJPE) des Doppel-Sphären-Fischaugen-Kameramodells, DS, 316. Allerdings steigt der Fehler des Lochkamera-Modells, PH, 314 über dem Schwellenwert exponentiell an, wohingegen der Fehler des Doppel-Sphären-Fischaugen-Kameramodells, DS, 316 eher linear steigt. Das hierin beschriebene hybride Modell (welches je nach maximalem Sehwinkel, *α*, eines der Modell auswählt; H(PH, DS)) hat über den gesamten Winkelbereich hinweg einen niedrigen Fehler. Der mittlere Positionsfehler pro Gelenk (MPJPE) ist ein beispielhafter Fehler. Im Falle des Prozentsatzes der korrekten Fixpunkte (PCK) liegt der Schwellenwert bei ungefähr 135°. Allgemein hat sich gezeigt, dass der Schwellenwert für verschiedene Fehlermetriken in einem Bereich von ungefähr 100° bis ungefähr 140° liegt. Daher kann, je nach Anwendungsfall ein Schwellenwert in diesem Bereich ausgewählt werden. Es hat sich gezeigt, dass der Fehler anderer Fischaugen-basierter Kameramodell, wie beispielsweise dem Äquidistanten Fischaugen-Kameramodell, für maximale Sehwinkel, *α*, größer als dem Schwellenwertwinkel, *αₜₕ,* ebenfalls kleiner ist als der Fehler des Lochkamera-Modells, PH, 314. Allerdings hat das Doppel-Sphären-Fischaugen-Kameramodells, DS, 316 den hierin beschriebenen zusätzlichen Vorteil der analytischen Invertierbarkeit.

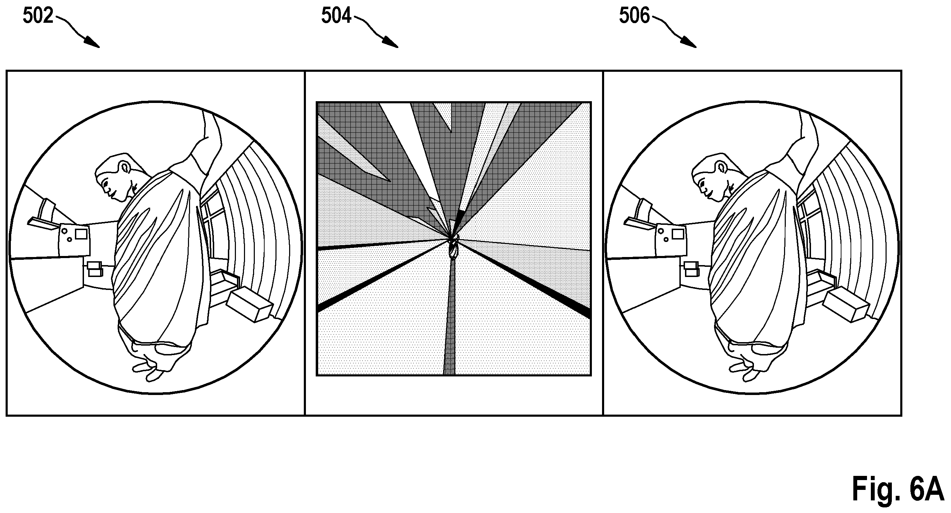

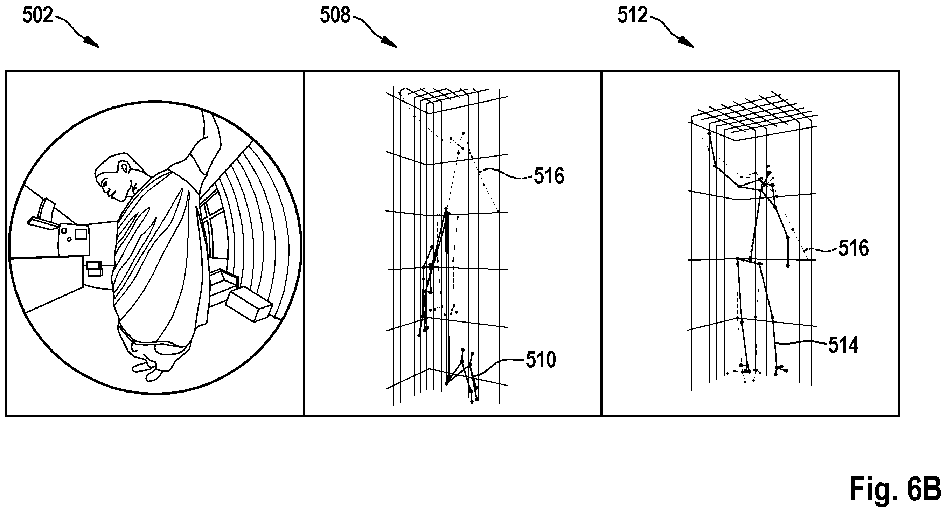

**FIG.6A** und **FIG.6B** zeigen verschiedene Aspekte des Lochkamera-Modells, PH, 314 und des Doppel-Sphären-Fischaugen-Kameramodells, DS, 316 wenn das Objekt sehr nah an der Fischaugenkamera 113 ist (und der maximale Sehwinkel, *α*, daher größer als der Schwellenwertwinkel, *αₜₕ,* ist).

FIG.6A zeigt ein beispielhaftes Fischaugenbild 502 mit einem sich nah an der Fischaugenkamera befindenden Menschen, eine PH-Projektion 504 dieses Fischaugenbildes 502 unter Verwendung des Lochkamera-Modells, PH, 314 und eine DS-Projektion 506 des Fischaugenbildes 502 unter Verwendung des Doppel-Sphären-Fischaugen-Kameramodells, DS, 316. Anschaulich zeigt sich, dass die PH-Projektion 504 (aufgrund der zugrunde liegenden mathematischen Annahmen) zu starken Bildverzerrungen führt, wenn das Objekt 116 nah an der Fischaugenkamera 113 ist. Demgegenüber führt das Doppel-Sphären-Fischaugen-Kameramodells, DS, 316 nicht zu solchen Verzerrungen.

FIG.6B zeigt in 508 anhand der PH-Projektion 504 ermittelte Fixpunkte 510 und in 512 anhand der DS-Projektion 506 ermittelte Fixpunkte 414 im Vergleich zu Grundwahrheits-Fixpunkten 516. Anschaulich zeigt sich, dass die anhand der DS-Projektion 506 ermittelte Fixpunkte 414 eine deutlich größere Genauigkeit bezüglich der Grundwahrheits-Fixpunkte 516 aufweisen.

Es wird verstanden, dass zusätzlich zu dem hierin beschriebenen Schwellenwert zusätzliche Schwellenwerte verwendet werden können, um beispielsweise in vergleichsweise großen Winkelbereichen und/oder in vergleichsweise kleinen Winkelbereichen ein noch anderes Kameramodell zu verwenden.

Mit Bezug auf FIG.3 kann der (z.B. in 308 gezoomte) Bildausschnitt 306 dann (in 210) projiziert werden. Dieses Projizieren kann auch als Reprojizieren bezeichnet werden, da das Bild initial eine Fischaugenprojektion ist, welche dann erneut projiziert wird. Der Bildausschnitt 306 wird so projiziert, als ob dieser mit dem ausgewählten Kameramodell erfasst worden wäre.

Dann kann der so projizierte Bildausschnitt 318 in das maschinelle Lernmodell 320 eingegeben werden, um die 3D Fixpunkte 322 zu ermitteln.

Optional kann die optischen Achse des Kameramodells 314, 316 vor dem Projizieren des Bildausschnitts 306 auf einen Mittelpunkt des Begrenzungsrahmens 304 (z.B. mittels Drehens der optischen Achse) ausgerichtet werden. Dadurch kann die Ausrichtung des Objekts 116 vergleichbar zu einer Ausrichtung von Objekten während des Trainierens des maschinellen Lernmodells 320 sein, wodurch die Genauigkeit der ermittelten 3D Fixpunkte 322 erhöht wird.

Das maschinelle Lernmodell 320 kann eingerichtet sein, in Reaktion auf die Eingabe des projizierten Bildausschnitts 318 die 3D Fixpunkte 322 des Objekts 116 auszugeben. Die 3D Fixpunkte 322 können relative 3D Fixpunkte oder absolute 3D Fixpunkte sein. Als relative Fixpunkte werden Fixpunkte verstanden, deren Position relativ zu einem Referenzpunkt angegeben wird (im Falle der Körperposen beispielsweise relativ zur Hüfte), wohingegen absolute Fixpunkte auch eine Position relativ zur Fischaugenkamera 113 (und damit im Raum) angeben. Für das Ermitteln der absoluten Fixpunkte können zusätzliche Informationen bezüglich des Kameramodells erforderlich sein. Die Körperposen können bei jeder Art von Roboter-Mensch-Interaktion von Bedeutung sein.

Gemäß verschiedenen Aspekten kann das maschinelle Lernmodell 320 eingerichtet sein, zusätzlich zu dem projizierten Bildausschnitt 318 noch andere Daten als Eingabe zu empfangen, um die 3D Fixpunkte vorherzusagen. Optional kann der Zoomfaktor in das maschinelle Lernmodell 320 eingegeben werden. In manchen Aspekten kann das maschinelle Lernmodell 320 eingerichtet sein, die 3D Fixpunkte 322 in Reaktion auf die Eingabe des projizierten Bildausschnitts 318 und von Informationen bezüglich des Kameramodells auszugeben. Diese Informationen können beispielsweise angeben, ob das Lochkamera-Modell, PH, 314 oder das Doppel-Sphären-Fischaugen-Kameramodell, DS, 316 zum Projizieren des Bildausschnitts verwendet wurde. Die Informationen können Parameter des ausgewählten Kameramodells aufweisen. Die Parameter des ausgewählten Kameramodells können vordefinierte Parameter und/oder Parameter, die sich aus den intrinsischen Parametern der Fischaugenkamera 113 ergeben, aufweisen.

In dem Fall, dass diese Informationen eingegeben werden, können die 3D Fixpunkte 322 beispielsweise absolute 3D Fixpunkte sein. Hierbei ist die Verwendung des Doppel-Sphären-Fischaugen-Kameramodells, DS, 316 als Fischaugen-basierten Kameramodells vorteilhaft, da dieses analytisch invertierbar ist. Die Invertierung ermöglicht, im Rahmen der Ermittlung der absoluten 3D Fixpunkte (z.B. zum Ermitteln von 3D-Posen) (ähnlich wie in Referenz [1] für das Lochkamera-Modell, PH, 314 beschrieben) normierte Bildkoordinaten aus den zuvor geschätzten 2D-Posen zu ermitteln. Dies ermöglicht aufgrund der analytischen Invertierbarkeit ein Ende-zu-Ende-Training (z.B. im Rahmen eines Fine-Tunings) des maschinellen Lernmodells 320 auch dann, wenn Fischaugen-Bilder verwendet werden. Wäre das Fischaugen-basierte Kameramodell nicht analytisch invertierbar, könnte das maschinelle Lernmodell nicht Ende-zu-Ende trainiert werden. Daher ist der Rechenaufwand im Vergleich zu iterativen Ansätzen verringert. Bezüglich des Ermittelns der absoluten 3D Fixpunkte für das Lochkamera-Modell, PH, 314 wird auf Referenz [1] verwiesen.

Gemäß verschiedenen Aspekten kann das maschinelle Lernmodell 320 das in Referenz [1] beschriebene maschinelle Lernmodell (MeTRAbs) sein. Beispielsweise kann ein auf das Lochkamera-Modell trainierte maschinelle Lernmodell zusätzlich (unter Verwendung von Grundwahrheitsdaten mit dem Format des Fischaugen-basierten Kameramodells) auf das Fischaugen-basierte Kameramodell trainiert werden (auch als Finetuning bezeichnet). Es wird verstanden, dass dies ein Beispiel ist und dass das maschinelle Lernmodell 320 jede Art von auf maschinellen Lernen basierenden Modell sein kann, das imstande ist, (absolute oder relative) 3D Fixpunkte anhand von Bildern zu erkennen.

Das hierin beschriebene Verfahren 200 kann die 3D Fixpunkte von Objekten in dynamischen Umgebungen erfassen und ist daher insbesondere für alle dynamischen Anwendungen (z.B. mobilen Robotern) geeignet. Die Robotervorrichtung 101 kann dann unter Verwendung der dreidimensionalen Fixpunkte 322 gesteuert werden. Wie hierin beschrieben, kann in manchen Aspekten hierbei eine Aktion (z.B. eine ausgeführte Geste) des Menschen anhand der dreidimensionalen Fixpunkte 322 ermittelt werden und die Robotervorrichtung 101 kann dann unter Verwendung der (erkannten) Aktion (z.B. der erkannten Geste) (und optional ferner der dreidimensionalen Fixpunkte 322) gesteuert werden, beispielsweise um eine Kollision mit dem Menschen zu vermeiden. Zum Ermitteln der Aktion (z.B. der ausgeführten Geste) kann beispielsweise eine anderes maschinelles Lernmodell verwendet werden, welches eingerichtet ist, die Aktion in Reaktion auf eine Eingabe der 3D Fixpunkte auszugeben.

Obgleich in den obigen Ausführungen das Ermitteln der 3D Fixpunkte 322 für ein einziges Objekt 116 beschrieben wird, wird verstanden, dass dies der Veranschaulichung dient und dass das Verfahren 200 entsprechend für mehrere (z.B. jedes) in dem Fischaugenbild 302 gezeigten Objekte durchgeführt werden kann (also anhand eines jeweiligen Begrenzungsrahmens eines jeden der mehreren Objekte), um für jedes der mehreren Objekte jeweilige 3D Fixpunkte (z.B. eine jeweilige Körperpose für jeden erkannten Menschen) zu ermitteln.

## Patentansprüche

1. Verfahren (200) zum Steuern einer Robotervorrichtung (101), das Verfahren (200) aufweisend:
• Empfangen (202) eines Bildes (302), welches ein Fischaugen-Format aufweist und ein Objekt (116) in einer Umgebung der Robotervorrichtung (101) zeigt;
• Ermitteln (204), mittels Objekterkennung, eines Begrenzungsrahmens (304), welcher eine Position des Objekts (116) in dem Bild (302) angibt;
• Ermitteln (206) eines Belegungswertes (310), welcher angibt, wie viel des Sichtfeldes der Kamera (113) das Objekt (116) belegt;
• Erzeugen (208) eines Bildausschnitts (306), welcher zumindest alle dem Begrenzungsrahmen (304) zugehörigen Bildpunkte aufweist;
• Ermitteln (210) eines projizierten Bildausschnitts (318) mittels Projizierens des Bildausschnitts (306) unter Verwendung eines Kameramodells, welches ein Lochkamera-Modell (314) ist, wenn der Belegungswert (310) kleiner als oder gleich einem Schwellenwert ist, und ein Fischaugen-basiertes Kameramodell (316) ist, wenn der Belegungswert (310) größer als der Schwellenwert ist;
• Eingeben (212) des projizierten Bildausschnitts (318) in ein maschinelles Lernmodell (320), welches eingerichtet ist, in Reaktion auf die Eingabe des projizierten Bildausschnitts (318) und Informationen bezüglich des Kameramodells dreidimensionale Fixpunkte (322) des Objekts (116) auszugeben; und
• Steuern (214) der Robotervorrichtung (101) unter Verwendung der dreidimensionalen Fixpunkte (322).

2. Verfahren (200) gemäß Anspruch 1,
wobei die dreidimensionalen Fixpunkte (322) absolute dreidimensionale Fixpunkte sind und wobei das Fischaugen-basierte Kameramodell (316) ein Doppel-Sphären-Fischaugen-Kameramodell ist;
wobei vorzugsweise das maschinelle Lernmodell (320) ein MeTRAbs-basiertes Lernmodell ist.

3. Verfahren (200) gemäß Anspruch 1 oder 2,
wobei das Ermitteln des Belegungswertes (310) aufweist:
• Ermitteln eines dreidimensionalen Begrenzungsrahmens mittels Projizierens des Begrenzungsrahmens (304) in einen dreidimensionalen Raum der Umgebung der Robotervorrichtung (101);
• Ermitteln eines maximalen Sehwinkels des dreidimensionalen Begrenzungsrahmens relativ zu einer Kameraposition, von welcher aus das Bild (302) erfasst wurde; und
• Auswählen des maximalen Sehwinkels als den Belegungswert (310).

4. Verfahren (200) gemäß Anspruch 3,
wobei der Schwellenwert in einem Bereich von ungefähr 100° bis ungefähr 140° liegt.

5. Verfahren (200) gemäß einem der Ansprüche 1 bis 4, ferner aufweisend:
vor dem Projizierens des Bildausschnitts (306), Ausrichten einer optischen Achse des Kameramodells (314, 316) auf einen Mittelpunkt des Begrenzungsrahmens.

6. Verfahren (200) gemäß einem der Ansprüche 1 bis 5, ferner aufweisend:
vor dem Projizierens des Bildausschnitts (306), Anpassen eines Zoomfaktors des Bildausschnitts (306) derart, dass der Bildausschnitt (308) eine vordefinierte Bildgröße aufweist.

7. Steuervorrichtung (106), die eingerichtet ist, das Verfahren (200) gemäß einem der Ansprüche 1 bis 6 auszuführen.

8. Robotervorrichtung (101), welche die Steuervorrichtung (106) gemäß Anspruch 7 aufweist.

9. Computerprogramm mit Befehlen, die, wenn sie durch einen Prozessor ausgeführt werden, bewirken, dass der Prozessor das Verfahren (200) gemäß einem der Ansprüche 1 bis 6 durchführt.

10. Computerlesbares Medium, das Befehle speichert, die, wenn sie durch einen Prozessor ausgeführt werden, bewirken, dass der Prozessor das Verfahren (200) gemäß einem der Ansprüche 1 bis 6 durchführt.
